## Europäisches Patentamt
## European Patent Office
## Office européen des brevets

(19)

(11) Numéro de publication: **0 009 037**
**B1**

(12) **FASCICULE DE BREVET EUROPEEN**

(45) Date de publication du fascicule du brevet: **17.11.82**

(51) Int. Cl.³: **B 65 G 57/18**

(21) Numéro de dépôt: **79930022.3**

(22) Date de dépôt: **28.08.79**

(54) **Procédé et installation pour réaliser des empilements de barres.**

(30) Priorité: **05.09.78 FR 7825513**

(43) Date de publication de la demande:
**19.03.80 Bulletin 80/6**

(45) Mention de la délivrance du brevet:
**17.11.82 Bulletin 82/46**

(84) Etats contractants désignés:
**AT BE DE GB IT SE**

(56) Documents cités:
**DE - A - 2 254 096**
**DE - A - 2 328 696**
**US - A - 2 559 460**

(73) Titulaire: **MecanARBED s. à r. l.**
**Avenue de la Liberté**
**L-2930 Luxembourg (LU)**

(72) Inventeur: **MecanARBED s. à r. l.**
**Avenue de la Liberté**
**L-2930 Luxembourg (LU)**

(74) Mandataire: **Neyen, René**
**Administration Centrale de l'Arbed Case postale 1802**
**L-2930 Luxembourg (LU)**

Courier Press, Leamington Spa, England.

## Procédé et installation pour réaliser des empilements de barres

La présente invention concerne un procédé et une installation pour réaliser des empilements réguliers de barres rigides, notamment métalliques.

L'invention vise notamment la réalisation d'ensembles de barres empilés les unes sur les autres d'une manière régulière, de façon à obtenir des paquets de barres ligaturées commodes à transporter et à vendre.

L'invention vise plus particulièrement l'empilage de barres de fer profilées, à section en U, en T ou en V.

L'empilage des barres de fer précitées est généralement effectué en réalisant des couches superposées comportant un nombre sensiblement identique de barres. Dans le cas de barres de fer de section en V, on réalise des empilements comprenant des couches de barres comportant $n$ barres, comprises entre des couches comportant n-1 barres, ces dernières étant retournées sur les couches à $n$ barres, de manière à bien imbriquer les couches les unes dans les autres.

Pour réaliser de tels empilements, on a proposé des machines dans lesquelles on forme en continue une couche de barres juxtaposées. On prélève une série de barres à l'extrémité de cette couche, la largeur de cette série correspondant sensiblement à la largeur de l'empilement que l'on veut réaliser. On transporte ensuite cette série de barres vers un poste d'empilement des barres.

Le fonctionnement de telles machines n'est pas satisfaisant pour la raison suivante: compte tenu des tolérances de fabrication des barres métalliques, il est pratiquement impossible d'obtenir des empilements parfaitement réguliers, sans chevauchement de barres les unes sur les autres. Ces chevauchements des barres nécessitent des interventions manuelles fréquentes qui ralentissent considérablement la cadence de fabrication des empilements.

D'autre part, pour réaliser le retournement des couches à n-1 barres sur cells à $n$ barres, les machines connues utilisent généralement des électro-aimants. Ces électro-aimants prélèvent une série de barres, soulèvent puis retournent cette série de barres avant de la déposer sur un plateau d'empilage.

Ainsi la US—A—2.599.460 décrit un dispositif dont le fonctionnement consiste en un transfert de barres par séries vers une station d'empilement, où une série est retournée sur l'autre de manière à ce que les barres soient imbriquées les une dans les autres. Ce retournement est réalisé à l'aide de systèmes porteurs, munis justement d'électro-aimants.

Pour maintenir les barres au cours du retournement dans une position stable, le document en question enseigne d'utiliser des support dentés où la forme des dents correspond au profil des barres à manipuler. L'électro-aimant agit en coopération avec le support denté.

Afin d'effectuer le changement des supports suivant les différents profils des barres à manipuler, il est prévu une roue dentée qui agit en tant que réservoir mobile et peu encombrant pour les différents supports.

Il est également prévu un système porteur, comportant lui-aussi un électro-aimant, d'une puissance suffisante pour soulever des séries entières de barres.

Si l'on veut utiliser le dispositif en question pour l'empilement de barres très lourdes, les électro-aimants doivent être conçus en conséquence; par contre lorsqu'il s'agit de manipuler des barres très légères, l'action d'électro-aimants puissants pourrait résulter en des déformations à moins de doter le système électrique d'une régulation de la puissance.

L'utilisation de tels électro-aimants présente l'inconvénient d'alourdir considérablement l'installation et de ralentir la cadence de fonctionnement de cette dernière.

De plus, l'utilisation de tels électro-aimants ne permet pas de résoudre le problème du chevauchement toujours possible des barres, compte tenu des tolérances de la largeur de ces dernières.

Le but de la présente invention est de fournir un procédé et une installation pour réaliser d'une manière entièrement automatique et sans risque de chevauchements, des empilements réguliers de barres rigides notamment métalliques.

Dans le procédé visé par l'invention, on forme en continu une couche de barres juxtaposées, et on prélève une série de barres à l'extrémité de cette couche, la largeur de cette série correspondant sensiblement à la largeur de l'empilement que l'on veut réaliser et on transporte cette série de barres vers un poste d'empilement.

Suivant l'invention, ce procédé est caractérisé par les étapes suivantes:

a) on amène sous la série précitée de barres une première série de peignes comportant des dents adaptées sensiblement à la section des barres, ces peignes étant dirigés transversalement aux barres, et on soulève la série de barres au moyen de ces peignes.

b) on règle l'espacement entre les axes des barres de ladite série à une valeur correspondant à la tolérance maximum de la largeur des barres.

c) on amène sous ladite série de barres une seconde série de peignes comportant des dents écartées suivant la tolérance maximum de la largeur des barres.

d) on abaisse la première série de peignes pour déposer la série de barres sur ladite seconde série de peignes.

e) on déplace cette seconde série de peignes portant les barres vers le poste d'empilement, et

f) on abaisse cette seconde série de peignes pour déposer les barres sur le poste d'empilement.

La première série de peignes permet de régler l'espacement entre les axes des barres disposées sur ces peignes, à une valeur correspondant à la tolérance maximum de la largeur des barres transportées et disposées sur le poste d'empilage par la seconde série de peignes.

Selon une version avantageuse du procédé, on règle l'espacement entre les axes des barres en modifiant l'angle compris entre la direction de déplacement des barres et la direction de la première série de peignes.

En diminuant l'angle compris entre les barres et la direction des peignes portant les barres, on augmente l'espacement entre les axes des barres, d'une manière telle qu'aucune barre ne puisse toucher et chevaucher une barre voisine.

Selon une version préférée de l'invention, pour réaliser des empilements comprenant des couches de barres comportant $n$ barres comprises entre des couches comportant n-1 barres, ces dernières étant retournées sur les couches comprenant $n$ barres, on amène sous la série de barres portée par la première série de peignes, une troisième série de peignes comportant n-1 dents, on soulève ces peignes de façon à prélever n-1 barres, on bloque ces barres sur lesdits peignes, on fait basculer ces peignes vers le poste d'empilement et on abaisse ces peignes pour déposer la couche de n-1 barres sur la couche sous-jacente comprenant $n$ barres.

On réalise ainsi le retournement des couches à n-1 barres sur les couches à $n$ barres sans utiliser aucun électro-aimant. De plus, notamment dans le cas de barres de section en V, les différentes couches sont parfaitement imbriquées les unes dans les autres sans chevauchements, car le prélèvement et le retournement de la couche à n-1 barres sont réalisés après réglage de l'écartement entre les axes des barres au moyen de la première série de peignes.

L'invention vise également une installation pour réaliser des empilements réguliers de barres rigides, comprenant des moyens pour former en continu une couche de barres juxtaposées, des moyens pour prélever une série de barres à l'extrémité de cette couche, la largeur de cette série correspondant sensiblement à la largeur de l'empilement que l'on veut réaliser et des moyens pour transporter cette série de barres vers un poste d'empilement.

Cette installation est caractérisée en ce qu'elle comprend:

a) des moyens pour amener sous la série précitée de barres une première série de peignes comportant des dents adaptées sensiblement à la section des barres, ces peignes étant dirigés transversalement aux barres, et ces peignes étant associés à des moyens pour soulever la série de barres au-dessus de la couche de barres,

b) des moyens pour régler l'espacement entre les axes des barres portées par lesdits peignes à la tolérance maximum de la largeur des barres,

c) des moyens pour amener sous ladite série de barres une seconde série de peignes comportant des dents écartées suivant la tolérance maximum de la largeur des barres,

d) des moyens pour abaisser la première série de peignes afin de déposer la série de barres sur ladite seconde série de peignes,

e) des moyens pour déplacer cette seconde série de peignes pour déposer les barres vers le poste d'empilement, et

f) des moyens pour abaisser cette seconde série de peignes pour déposer les barres.

Selon une version préférée, pour réaliser des empilements comprenant des couches de barres comportant $n$ barres comprises entre des couches comportant n-1 barres, ces dernières étant retournées sur les couches comprenant $n$ barres, 1' installation comprend des moyens pour amener sous la série de barres portée par la première série de peignes, une troisième série de peignes comportant n-1 dents, des moyens pour soulever ces peignes afin de prélever n-1 barres, des moyens pour bloquer ces barres sur lesdits peignes, des moyens pour faire basculer ces peignes autour d'un axe parallèle aux barres vers le poste d'empilement et des moyens pour abaisser ces peignes afin de déposer la couche de n-1 barres sur la couche sousjacente comprenant $n$-barres.

D'autres particularités et avantages de l'invention apparaîtront encore dans la description ci-après.

Aux dessins annexés donnés à titre d'exemples non limitatifs:

— les figures 1 à 12 sont des vues schématiques en élévation latérale de l'installation conforme à l'invention, montrant les différentes étapes de fonctionnement de cette dernière, ainsi que les différentes étapes du procédé selon l'invention.

— la figure 13 est une vue en plan de l'installation conforme à l'invention, après enlèvement du guide supérieur des barres.

— la figure 14 est une vue en coupe suivant le plan XIV—XIV de la figure 13.

— la figure 15 est une vue de dessus du bras porte-peigne seul.

— la figure 16 est une vue schématique montrant une peigne de la première série, dans trois positions différentes de celui-ci.

— la figure 17 est une vue de dessus de la figure 16.

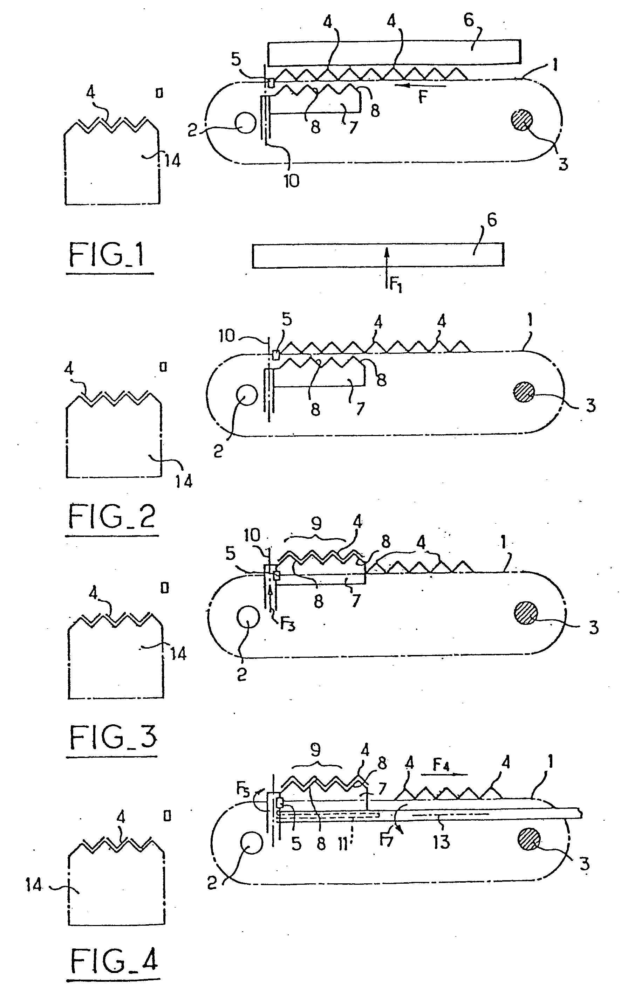

On va d'abord décrire, en référence aux figures 1 à 12, le procédé conforme à l'invention.

La chaîne sans fin 1, entraînée en rotation par des roues montées sur les axes 2 et 3, déplace suivant la flèche F (voir figure 1) une couche de barres 4 juxtaposées. Dans cet exemple, les barres 4 sont constituées par des profilés de section en V ou cornières placées sur la chaîne 1, de façon que leur arête soit dirigée vers le haut.

Le déplacement de la couche de profilés 4 est arrêté lorsque l'extrémité de cette couche atteint la butée 5. Le chevauchement des profilés 4 est empêché par un guide 6 qui s'étend au-dessus de la couche de profilés 4.

La mise en oeuvre du procédé conforme à l'invention est opérée comme suit:

Après formation de la couche de profilés 4 contre la butée 5, on déplace vers le haut le guide 6 (voir figure 2, flèche $F_1$), puis on amène sous l'extrémité de la couche de profilés 4 en contact avec la butée 5, une première série de peignes parallèles 7 comportant des dents 8 adaptées sensiblement à la section des profilés 4, ces peignes 7 étant dirigés transversalement aux profilés 4. On soulève ensuite les peignes 7 suivant la flèche $F_3$ (voir figure 3), ce qui a pour effet d'écarter de la couche de profilés 4, une série 9 composée de $n$ profilés 4, ce nombre $n$ correspondant au nombre de dents 8 des peignes 7.

On recule légèrement la couche restante de profilés 4 (voir flèche $F_4$ de la figure 4) de manière à écarter ceux-ci de la série 9 de profilés portée par les peignes 7.

Dans une étape ultérieure, on règle l'espacement entre les axes des profilés de la série 9 à une valeur correspondant à la tolérance maximum de la largeur des profilés 4. Cette opération est réalisée en faisant tourner les peignes 7 autour de l'axe vertical 10 (voir flèche $F_5$), de façon à modifier l'angle compris entre les profilés 4 et la direction de la série de peignes 7, comme on le verra plus en détail plus loin lors de la description de l'installation conforme à l'invention.

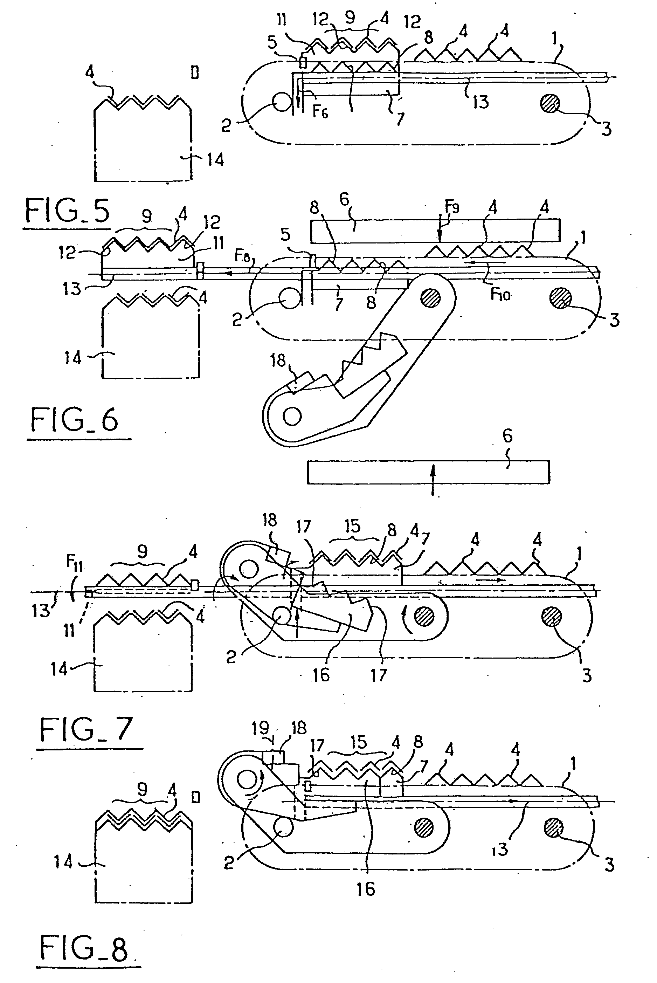

On amène ensuite sous la série 9 de profilés 4, une seconde série de peignes parallèles 11 (voir figure 5) comportant des dents 12 écartées suivant la tolérance maximum de la largeur des profilés 4 et on abaisse (voir flèche $F_6$) la première série de peignes 7.

Dans l'exemple représenté, la seconde série de peignes est amenée sous la série 9 de profilés 4 en faisant tourner les peignes 11 autour d'un axe 13 (voir figure 4, flèche $F_7$) entre une position dans laquelle les peignes 11 sont disposés sensiblement dans un plan horizontal (voir position en pointillés de la figure 4 vers une position dans laquelle les peignes 11 sont sensiblement verticaux, comme indiqué sur la figure 5.

Dans l'étape suivante (voir figure 6), on déplace (voir flèche $F_8$) la seconde série de peignes 11 portant les $n$ profilés vers le poste d'empilage 14.

Après le déplacement des peignes 11, on abaisse le guide 6 vers la chaîne sans fin 1 et on fait avancer cette dernière afin de former une nouvelle couche de profilés 4 dont l'extrémité est en contact avec la butée 5.

Dans une étape ultérieure (voir figure 7) on fait tourner successivement les peignes parallèles 11 autour de l'axe (voir flèche $F_{11}$) de la position verticale représentée sur la figure 5, vers la position horizontale indiquée en pointillés sur la figure 7. En faisant tourner et en retirant successivement les peignes 11 et ceci en partant d'un côté, les profilés 4 de la série 9 s'inclinent d'abord de ce côte vers le poste d'empilage 14, puis au retour du dernier peigne 11 vers sa position initiale, la série 9 de profilés se dépose sur le poste d'empilage 14.

Pendant le retournement et le retrait des peignes 11, la première série de peignes 7 soulève une nouvelle série 15 de $n$ profilés puis règle l'espacement entre les axes de ces profilés 4, comme expliqué en référence à la figure 4. Un nouveau cycle d'opérations est donc commencé en vue de déposer une nouvelle couche de profilés 4 sur le poste d'empilage 14.

Pour obtenir une superposition régulière de cette nouvelle couche de profilés 4 sur la précédente, cette nouvelle couche doit contenir seulement (n-1) profilés et de plus, cette dernière doit être retournée sur la couche sous-jacente.

A cet effet, on procède comme suit:

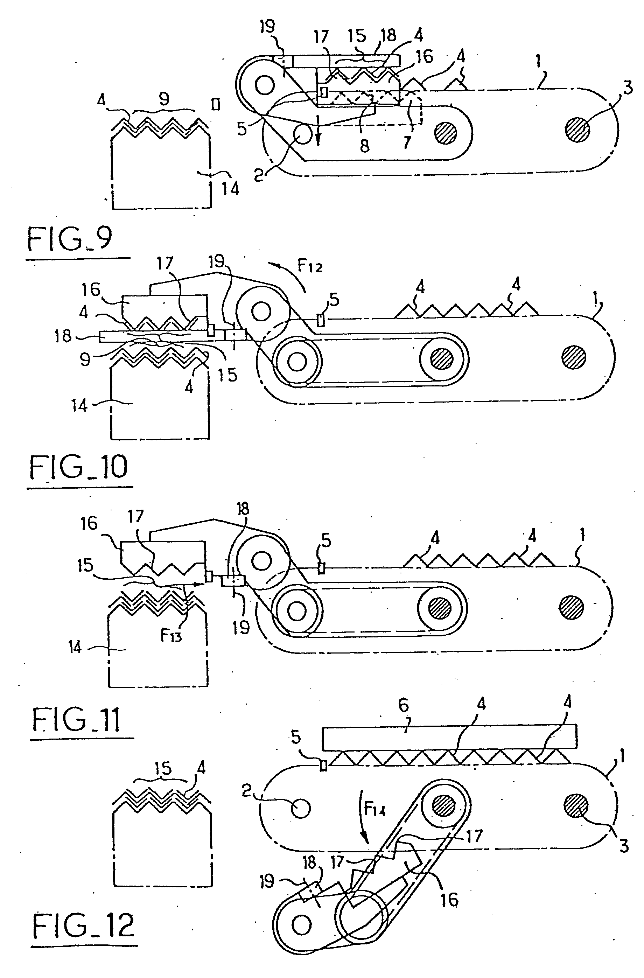

On amène sous la série 15 de profilés soulevés par la première série de peignes 7, une troisième série de peignes 16 (voir figure 7) comportant n-1 dents 17 et on place ces peignes 16 en contact avec la série 15 de profilés portés par la première série de peignes 7 (voir figure 8). On abaisse ensuite les peignes 7, de sorte que (n-1) profilés 4 reposent sur la troisième série de peignes 16 (figure 9).

Dans cette position, on bloque les (n-1) profilés 4 sur les peignes 16, en amenant au-dessus de ces profilés des bras 18 articulés sur un axe vertical 19.

Dans une étape suivante, on fait pivoter les peignes 16 (voir flèche $F_{12}$ de la figure 10) vers le poste d'empilage 14, puis on escamote successivement les bras 18 (flèche $F_{13}$—figure 11) de manière à déposer la série 15 de n-1 profilés sur la couche sousjacente comprennant $n$ profilés.

Les peignes 16 sont ensuite ramenés à leur position initiale (figure 12-flèche $F_{14}$), à partir de laquelle débute un nouveau cycle de fonctionnement.

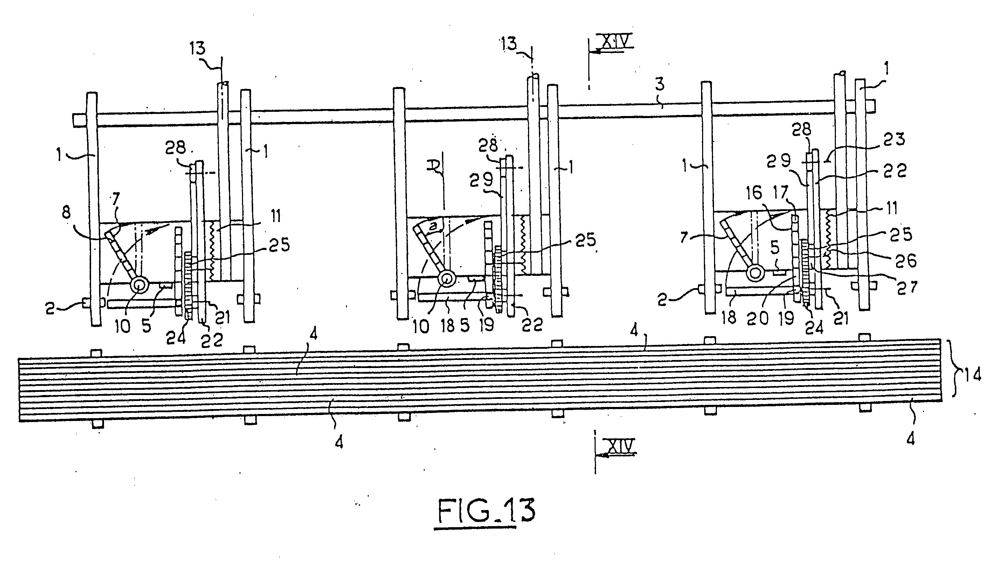

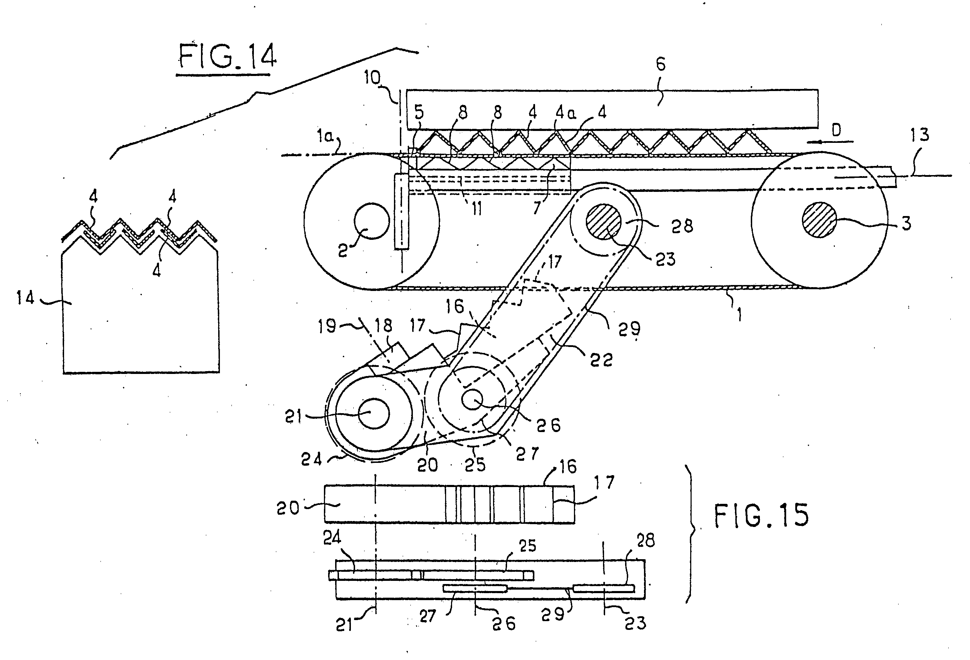

En référence aux figures 13, 14 et 15, l'installation conforme à l'invention comprend une série de chaînes sans fin parallèles 1, montées en rotation autour d'axes 2 et 3. Légèrement en avant de ces chaînes 1, est disposé un poste d'empilement 14 et des profilés métalliques 4 s'étendent parallèlement aux axes 2 et 3 des chaînes 1. En arrière des axes 2, des butées 5 font saillie par rapport au plan supérieur la défini par les chaînes 1 (voir figure 14). Sur la figure 14, ce plan supérieur la des chaînes 1 porte des profilés métalliques 4 dont les arêtes 4a sont dirigées vers le haut. Au-dessus de ces profilés 4 s'étend un guide 6 non-représenté sur la figure 13. Ce guide 6 est mobile suivant un axe perpendiculaire aux chaînes 1, comme expliqué en référence à la figure 2. Le déplacement du guide 6 peut être commandé par des moyens non représentés sur les figures, tels que des vérins pneumatiques ou hydrauliques ou autres dispositifs mécaniques ou électriques.

L'installation comprend une première série de peignes 7 parallèles portant des dents 8, ces peignes 7 s'étendant dans une direction transversale à la direction des profilés 4, c'est-à-dire à celle ces axes 2 et 3. Ces peignes 7 sont montés rotativement autour d'axes verticaux 10 disposés sensiblement dans l'alignement des butées 5. Des moyens de commande non représentés permettent de régler l'angle *a* compris entre les peignes 7 et la direction D de déplacement des profilés 4 disposés sur les chaînes 1. Ces peignes 7 sont également mobiles dans la direction des axes verticaux 10. Les moyens de commande du déplacement des peignes 7 peuvent être, par exemple, des vérins au autre dispositif de commande mécanique, automatique où manuel.

L'installation comprend, d'autre part, une seconde série de peignes parallèles 11 disposés sensiblement dans l'alignement latéral des peignes 7. Dans la position représentée sur les figures 13 et 14, les peignes 11 sont disposés dans un plan horizontal. Les peignes 11 sont, parailleurs, montés en rotation sur des axes 13 parallèles aux chaînes 1, des moyens de commande non représentés permettant d'amener ces peignes 11 en position verticale comme expliqué en référence à la figure 5.

L'installation comprend, en outre, une troisième série de peignes 16 également parallèles les uns avec les autres et s'étendant dans la direction D de déplacement des chaînes 1 ou des profilés 4. Comme on le voit sur la figure 14, les peignes 16 sont portés par des bras 20 articulés sur un axe 21 fixé à un levier coudé 22 qui est lui-même articulé sur un axe fixe 23 situé dans le plan des axes 2 et 3 et sensiblement au milieu de ces derniers. La rotation du bras 20 autour de l'axe 21 est commandée par deux pignons 24 et 25 engrènant l'un avec l'autre, le pignon 25 étant monté sur un axe 26 du levier coudé 22. Sur cet axe 26 est également montée une poulie 27 reliée à une autre poulie 28 fixée sur l'axe 23 au moyen d'une chaîne 29. La rotation de l'axe 23 qui est commandée par des moyens non représentés a pour effet d'amener le peigne 16 sous les profilés 4 disposés sur les chaînes 1, de soulever ces derniers puis de les retourner pour les amener sur le poste d'empilage 14, comme expliqué en référence aux figures 7 à 10.

Les bras 20 qui portent les peignes 16 comprennent, d'autre par, un levier 18 monté pivotant suivant un axe 19. Dans la position indiquée sur les figures 13 et 14, le levier 18 est en position inactive: il est placé perpendiculairement à la direction D. Ce levier 18 peut être placé parallèlement à cette direction après rotation autour de l'axe 19. Cette rotation est commandée par des moyens non représentés. La fonction du levier 18 a été expliquée en référence aux figures 9 à 11.

Pour comprendre le fonctionnement de l'installation que l'on vient de décrire, on se référera à la description du procédé conforme à l'invention qui a été effectuée en référence aux figures 1 à 12.

On donnera cependant ci-après des détails complémentaires concernant le fonctionnement de la première série de peignes 7.

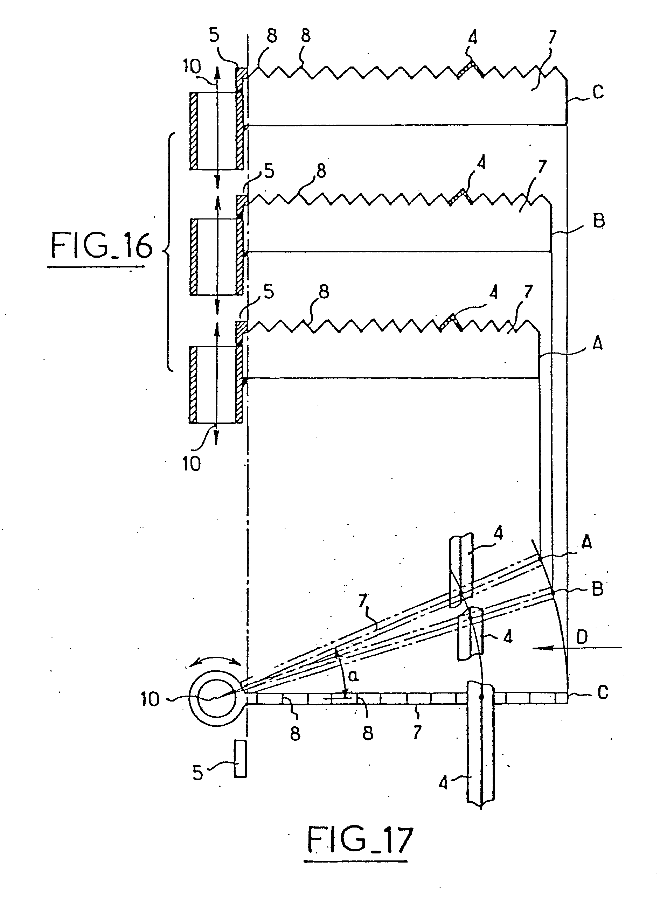

Sur les figures 16 et 17, les peignes 7 portent des profilés 4 de section en V. L'angle *a* (voir figure 17, position A), compris entre la direction D de déplacement des profilés 4 et la direction des peignes 7, est réglable par rotation de ces derniers autour de l'axe 10. On a représenté à titre d'exemple trois positions angulaires différentes A, B, C, du peigne 7, la position angulaire C correspondant à un angle *a* nul.

La position A correspond, par exemple, à la position de réglage initiale des peignes 7, où les axes des profilés 4 sont écartés les uns des autres suivant la tolérance zéro de la largeur des profilés (c.à.d. leur largeur moyenne théorique).

Compte tenu des tolérances de fabrication relativement larges des profilés 4, si on maintient l'écartement entre les axes des profilés 4 suivant la position A de réglage initiale des profilés 4, on risque des chevauchements de ceux-ci pouvant perturber considérablement la suite des opérations.

Pour éviter un tel risque, on diminue l'angle *a* jusqu'a obtenir par exemple la position de réglage B des peignes 7 suivant laquelle les axes des profilés 4 sont écartés les uns des autres d'une distance correspondant à la tolérance maximum de la largeur de ces profilés 4.

Cet angle *a* peut être diminué le cas échéant jusqu'à une valeur nulle, comme indiqué par la position C.

Grâce au procédé et à l'installation conformes à l'invention il est possible de réaliser d'une manière automatique l'empilage de profilés 4 suivant des paquets parfaitement réguliers et cohérents dans lesquels les différentes couches de profilés sont parfaitement imbriquées les unes dans les autres.

L'expérience a montré que l'empilage de ces profilés 4 pouvait être réalisé à une cadence très élevée, sans aucune perturbation nécessitant une intervention manuelle.

Bien entendu, l'invention n'est pas limitée aux exemples que l'on vient de décrire et on peut apporter à ceux-ci de nombreuses modifications sans sortir du cadre de l'invention.

Ainsi, l'installation peut être adaptée à l'empilage de profilés métalliques de section ronde, carrée, en U ou en T.

A cet effet, il suffit d'adapter les peignes 7, 11 et 16 à la section de ces profilés.

Dans le cas de profilés de section ronde, carrée ou rectangulaire par exemple, il n'est pas nécessaire de mettre en oeuvre les peignes retourneurs 16, car le retournement alternatif des couches de profilés est inutile pour ces derniers.

Par ailleurs, l'invention peut être également appliquée à l'empilage de barres ou de profilés en matière plastique, en bois ou en tout autre matériau relativement rigide.

Le fonctionnement en continu de l'installation conforme à l'invention peut bien entendu être assuré d'une manière entièrement automatique, en commandant les différentes phases de fonctionnement de cette installation suivant les séquences prédéterminées.

**Revendications**

1. Procédé pour réaliser des empilements réguliers de barres rigides (4), dans lequel on forme en continu une couche de barres (4) juxtaposées, on prélève une série (9) de barres (4) à l'extrémité de cette couche, la largeur de cette série correspondant sensiblement à la largeur de l'empilement que l'on veut réaliser, et on transporte cette série (9) de barres (4) vers un poste d'empilement (14), caractérisé par les étapes suivants:

a) on amène sous la série (9) précitée de barres (4) une première série de peignes (7) comportant des dents (8) adaptées sensiblement à la section des barres, ces peignes (7) étant dirigés transversalement aux barres (4) et on soulève la série (9) de barres (4) au moyen de ces peignes (7),

b) on règle l'espacement entre les axes des barres (4) de ladite série (9) à une valeur correspondant à la tolérance maximum de la largeur des barres (4) et ceci à l'aide des peignes (7),

c) on amène sous ladite série (9) de barres (4) une seconde série de peignes (11) comportant des dents (12) écartées suivant la tolérance maximum de la largeur des barres (4),

d) on abaisse la première série de peignes (7) pour déposer la série (9) de barres (4) sur ladite seconde serie de peignes (11),

e) on déplace cette seconde série de peignes (11) portant les barres (4) vers le poste d'empilement (14), et

f) on tourne et on retire successivement chacun des peignes de cette seconde série de peignes (11) pour incliner et finalement déposer les barres (4) sur le poste d'empilement (14).

2. Procédé conforme à la revendication 1, caractérisé en ce qu'on règle l'espacement entre les axes des barres (4) en modifiant l'angle compris entre la direction de déplacement des barres (4) et la direction de la première série de peignes.

3. Procédé conforme à l'une quelconque des revendications 1 ou 2, dans lequel on réalise des empilements comprenant des couches de barres (9) comportant $n$ barres (4) comprises entre des couches (15) comportant n-1 barres (4), ces dernières étant retournées sur les couches (9) comprenant n barres (4), on amène sous la série de barres (4) portée par le première série de peignes (7), une troisième série de peignes (16) comportant n-1 dents, on soulève ces peignes de façon à prélever n-1 barres, on bloque ces barres sur lesdits peignes (16), on fait basculer ces peignes (16) vers le poste d'empilement (14) et on abaisse ces peignes pour déposer la couche (15) de n-1 barres (4) surla couche (9) sous jacente comprenant $n$ barres (4).

4. Procédé conforme à l'une quelconque des revendications 1 ou 2, caractérisé en ce que pour amener sous la série (9) de barres (4) ladite seconde série de peignes (11), on fait tourner ceux-ci suivant l'axe (13) parallèle à la direction de déplacement des barres (4), entre une position dans laquelle les peignes (11) sont disposés sensiblement dans un plan horizontal vers une position dans laquelle ces peignes (11) sont sensiblement verticaux.

5. Procédé conforme à l'une quelconque des revendications 1 à 4, caractérisé en ce que pour déposer les barres (4) sur le poste d'empilement (14), on fait tourner successivement les peignes (11) portant les barres (4) de la position sensiblement verticale vers la position sensiblement horizontale.

6. Procédé conforme à l'une quelconque des revendications 1 à 5, caractérisé en ce qu'avant de régler l'espacement entre les axes des barres (4) selon l'étape b) de la revendication 1, on recule légèrement la couche de barres (4) située en amont de la série (9) resp. (15) de barres (4) portée par la première série de peignes (7).

7. Installation pour réaliser des empilements réguliers de barres rigides (4), comprenant des moyens pour former en continu une couche de barres (4) juxtaposées, des moyens pour prélever une série de barres (4) à l'extrémité de cette couche, la largeur de cette série correspondant sensiblement à la largeur de l'empilement que l'on veut réaliser, et des moyens pour transporter cette série de barres (4) vers un poste d'empilement (14), caractérisée en ce qu'elle comprend:

a) des moyens pour amener sous la série précitée de barres (4) une première série de peignes (7) comportant des dents (8) adaptés sensiblement à la section des barres, ces peigns (7) étant dirigés transversalement aux barres (4), ces peignes (7) étant associés à des moyens pour soulever la série de barres (4) audessus de la couche de barres (4),

b) des moyens pour régler d'espacement entre les axes des barres (4) portées par lesdits peignes (7) à la tolérance maximum de la largeur des barres (4), lesquels moyens étant les peignes (7) eux-mêmes,

c) des moyens pour amener sous ladite série de barres (4) une seconde série de peignes (11) comportant des dents (12) écartées suivant la tolérance maximum de lar larteur des barres,

d) des moyens pour abaisser la première série de peignes (7) afin de déposer la série de barres (4) sur ladite seconde série de peignes (11),

e) des moyens pour déplacer cette seconde série de peignes (11) portant les barres (4) vers le poste d'empilement (14), et

f) des moyens pour tourner et retirer successivement les peignes de cette seconde série de peignes (11) pour incliner et finalement déposer les barres (4).

8. Installation conforme à la revendication 7, caractérisée en ce que la première série de peignes (7) est articulée suivant un axe (13) perpendiculaire à la couche de barres, des moyens étant prévus pour faire tourner ces peignes (7) autour de leur axe (13) précité afin de régler l'angle compris entre les barres (4) et la direction de ces peignes (7).

9. Installation conforme à l'une quelconque des revendications 7 ou 8, pour réaliser des empilements comprenant des couches (9) de barres (4) comportant n barres comprises entre des couches (15) comportant (n-1) barres (4), ces dernières étant retournées sur les couches (9) comprenant n barres (4), caractérisé en ce qu'elle comprend des moyens pour amener sous la série de barres (4) portée par la première série de peignes (7), une troisième série de peignes (16) comportant (n-1) dents, des moyens pour soulever ces peignes (16) afin de prélever (n-1) barres (4) des moyens (18) pour bloquer ces barres sur lesdits peignes (16), des moyens pour faire basculer ces peignes (16) autour d'un axe (21) parallèle aux barres (4) vers le poste d'empilement (14) et des moyens pour abaisser ces peignes (16) afin de déposer la couche (15) de (n-1) barres sur la couche sousjacente (9) comprenant n barres.

10. Installation conforme à l'une quelconque des revendications 7 à 9, caractérisée en ce que ladite seconde série de peignes (11) comprend des moyens pour les faire tourner suivant un axe (13) parallèle à la direction de déplacement des barres, entre une position sensiblement horizontale des peignes (11) et une position sensiblement verticale et inversement.

11. Application du procédé conforme à l'une quelconque des revendications 1 à 6 et de l'installation conforme à l'une quelconque des revendications 7 à 10 à la réalisation d'empilements parallélépipédiques de profilés métalliques de section en V.

**Patentansprüche**

1. Verfahren zum regelmässigen Stapeln von starren Stäben (4), in welchem man durchgehend eine Reihe von nebeneinanderliegenden Stäben (4) bildet, eine Gruppe (9) von Stäben (4) am Ende dieser Reihe wegnimmt, wobei die Breite dieser Anzahl nahezu mit der Breite des herzustellenden Stapels übereinstimmt, und diese Gruppe (9) von Stäben (4) zu einem Stapelplatz (14) hinfördert, dadurch gekennzeichnet, dass es folgende Stufen begreift:

a) unter die vorerwähnte Gruppe (9) von Stäben (4) wird eine erste Serie von Kämmen (7) geführt, welche Zähne (8) begreift, die nahezu dem Querschnitt der Stäbe angepasst sind, wobei die Kämme (7) quer zu den Stäben (4) ausgerichtet sind und die Gruppe (9) von Stäben (4) mittels der Kämme (7) angehoben werden;

b) der Abstand zwischen der Stabachsen der besagten Gruppe (9) wird mittels der Kämme (7) auf einen Wert eingestellt, der dem maximalen Toleranzwert der Stabbreite entspricht;

c) unter die Gruppe (9) von Stäben (4) wird eine zweite Serie von Kämmen (11) gebracht, deren Zahnabstand dem maximalen Toleranzwert der Stabbreite entspricht;

d) die erste Serie von Kämmen (7) wird heruntergelassen um die Gruppe (9) von Stäben (4) auf die besagte zweite Serie von Kämmen (11) aufzulegen;

e) die zweite Serie von Kämmen (11), welche die Stäbe (4) tragen, wird zu dem Stapelplatz (14) hinbewegt und

f) die Kämme dieser zweiten Serie von Kämmen (11) werden nacheinander gedreht und zurückgezogen, wobei die Stäbe (4) sich zum Stapelplatz (14) neigen und schliesslich abgesetzt werden.

2) Verfahren gemäss Anspruch 1, dadurch gekennzeichnet, dass man den Abstand zwischen den Stabachsen durch Aendern des Winkels zwischen der Bewegungsrichtung der Stäbe (4) und der Richtung der ersten Serie von Kämmen einstellt.

3) Verfahren gemäss einem der Ansprüche 1 oder 2, in welchem man Stapel bildet, welche Gruppen (9) von n Stäben (4) umfassen zwischen Gruppen (15) von n-1 Stäben (4), wobei letztere umgedrht auf den Gruppen (9) von n Stäben (4) liegen, unter die Gruppe von Stäben, die von der ersten Serie von Kämmen (7) getragen wird eine dritte Serie von Kämmen (16) mit n-1 Zähnen bringt, diese Kämme derart aufhebt, dass n-1 Stäbe abgehoben werden, diese Stäbe auf den besagten Kämmen (16) festklemmt, die Kämme (16) zu dem Stapelplatz (14) hinführt und die Kämme herablässt um die Gruppe (15) von n-1 Stäben (4) auf die darunterliegende, n Stäbe (4) umfassende Gruppe (9) abzusetzen.

4. Verfahren gemäss einem der Ansprüche 1 bis 2, dadurch gekennzeichnet, dass man um die zweite Serie Kämme (11) unter die Serie (9) von Stäben (4) zu bewegen diese um eine Achse (13) drehen lässt, welche parallel zur Bewegungsrichtung der Stäbe (4) ist, von einer Lage in der die Kämme (11) sich nahezu in einer horizontalen Ebene befinden zu einer Lage in der die Kämme (11) nahezu vertikal sind.

5. Verfahren gemäss einem der Ansprüche 1 bis 4, dadurch gekennzeichnet, dass man um die Stäbe auf dem Stapelplatz (14) abzulegen, die die Stäbe (4) tragenden Kämme (11) nacheinander von einer nahezu vertikalen Lage in eine nahezu horizontale Lage dreht.

6. Verfahren gemäss einem der Ansprüche 1 bis 5, dadurch gekennzeichnet, dass man, bevor man den Abstand zwischen den Achsen der Stäbe (4) gemäss Stufe b) des Anspruchs 1 einstellt, die Reihe von Stäben (4), welche sich oberhalb der von der ersten Serie von Kämmen (7) getragenen Stäbe der Gruppe (9) resp. (15) befinden, leicht zurückgesetzt.

7. Anordnung zum regelmässigen Stapeln von starren Stäben (4), welche Mittel zum durchgehenden Bilden von nebeneinanderliegenden Stäben (4) umfasst, Mittel zum Wegnehmen einer Gruppe von Stäben (4) am Ende dieser Reihe, wobei die Breite dieser Gruppe nahezu mit der Breite des herzustellenden Stapels übereinstimmt, und Mittel zum Fördern dieser Gruppe Stäbe (4) zu einem Stapelplatz (14), dadurch gekennzeichnet, dass sie folgendes umfasst:

a) Mittel um unter die vorerwähnte Gruppe von Stäben (4) eine erste Serie von Kämmen (7) zu führen, welche Zähne (8) begreifen, die nahezu dem Querschnitt der Stäbe angepasst sind, wobei diese Kämme (7) quer zu den Stäben (4) ausgerichtet sind und die Kämme (7) mit Mitteln zum Anheben der Gruppe von Stäben (4) über die Reihe von Stäben (4) versehen sind,

b) Mittel um den Abstand zwischen den Achsen der von den Kämmen (7) getragenen Stäbe (4) auf den maximalen Toleranzwert der Stabbreite einzustellen, welche Mittel von den Kämmen (7) selbst dargestellt werden,

c) Mittel um unter die vorerwähnte Gruppe von Stäben (4) eine zweite Serie von Kämmen (11) zu führen, deren Zahnabstand dem maximalen Toleranzwert der Stabbreite entspricht,

d) Mittel um die erste Serie von Kämmen (7) herunterzulassen um die Gruppe von Stäben (4) auf die vorerwähnte zweite Serie von Kämmen (11) aufzulegen,

e) Mittel um die zweite Serie von Kämmen (11), welche die Stäbe (4) tragen, zu dem Stapelplatz (14) zu bewegen, und

f) Mittel um die Kämme dieser zweiten Serie von Kämmen (11) nacheinander zu drehen und zurückzuziehen, wobei die Stäbe (4) sich neigen und schliesslich abgesetzt werden.

8. Anordnung gemäss Anspruch 7, dadurch gekennzeichnet, dass die erste Serie Kämme (7) relativ zu einer zu den Stäben senkrechten Achse (13) beweglich ist, wobei Mittel um die Kämme (7) um die vorerwähnte Achse (13) drehen zu lassen vorgesehen sind zum Einstellen des Winkels zwischen den Stäben (4) und der Richtung der Kämme (7).

9. Anordnung gemäss einem der Ansprüche 7 oder 8 um Stapel zu bilden, welche Gruppen (9) von *n* Stäben (4) umfassten, welche sich zwischen Gruppen (15) von n-1 Stäben (4) befinden, wobei letztere umgedreht auf den Gruppen (9) von *n* Stäben (4) liegen, dadurch gekennzeichnet, dass sie Mittel begreift, um unter die, von der ersten Serie Kämme (7) getragenen Stäbe (4), eine dritte Serie von Kämmen (16) mit n-1 Zähnen zu bringen, Mittel zum Aufheben der Kämme (16) um n-1 Stäbe abzuheben, Mittel (18) um die Stäbe auf den Kämmen (16) festzuklemmen, Mittel um die Kämme (16) um eine zu den Stäben (4) parallelen Achse (21) zu dem Stapelplatz (14) hin zu drehen, sowie Mittel um die Kämme herabzulassen um die Gruppe (15) von n-1 Stäben auf die darunterliegende Gruppe von *n* Stäben abzusetzen.

10. Anordnung gemäss einem der Ansprüche 7 bis 9, dadurch gekennzeichnet, dass die besagte zweite Serie von Kämmen (11) mit Mitteln versehen ist um sie um eine zu der Bewegungsrichtung der Stäbe parallelen Achse (13) drehen zu lassen und dies von einer nahezu horizontalen Lage der Kämme (11) zu einer nahezu vertikalen Lage und umgedreht.

11. Anwendung des Verfahrens gemäss einem der Ansprüche 1 bis 6 und der Anordnung gemäss einem der Ansprüche 7 bis 10, zum Herstellen von quaderförmigen Stapeln von Metall-Profilen mit V-förmigem Schnitt.

## Claims

1. Process for forming regular stacks of rigid bars (4) comprising the continuous formation of a row of juxtaposed bars (4), the removal of a group (9) of bars (4) from the extremity of the row, the size of the group approximately corresponding to the size of the stack to be formed, the transfer of said group (9) of bars (4) towards the stacking platform (14), characterized by the following steps:

a) a first series of combs (7) with teeth (8) more or less adapted to the cross section of the bars is placed under above mentioned group (9) of bars (4), the combs (7) being directed transversely in respect to the bars (4) and the group (9) of bars (4) being lifted by the combs (7),

b) the spacings between the axes of the bars (4) contained in said group (9) of bars are adjusted with the help of the combs (7) to a value corresponding to the maximum tolerance in the size of the bars (4),

c) a second series of combs (11) with teeth (12) spaced in accordance with the maximum tolerance in the size of the bars (4) is placed under said group (9) of bars (4),

d) the first series of combs (7) is lowered to deposit the group (9) of bars (4) onto said second series of combs (11),

e) the second series of combs (11) carrying the bars (4) is moved towards the stacking platform (14) and

f) the combs of the second series of combs (11) are successively turned and retracted to incline and ultimately deposit the bars (4) onto the stacking platform (14).

2. Process in accordance with claim 1 characterized in that the adjustment of the spacings between the axes of the bars (4) is carried out by modifying the angle formed by the deplacement direction of the bars (4) and the direction of the first series of combs.

3. Process in accordance with any of the claims 1 or 2 by which stacks are formed which comprise rows (9) of *n* bars (4) between rows (15) of n-1 bars (4), the latter ones being turned over rows (9) of *n* bars (4), furthermore a third series of combs (16) of n-1 teeth is placed under the bars (4) carried by the first series of combs (7), the third series of combs is lifted in such a manner that n-1 bars are removed, these bars are clamped on the combs (16), which are moved towards the stacking platform (14) where they are lowered to deposit a row (15) of n-1 bars (4) onto the subjacent row (9) of *n* bars (4).

4. Process in accordance with any of the claims 1 or 2, characterized in that to place the second series of combs (11) under the group (9) of bars (4) the second series of combs (11) is turned around the axis (13) parallel to the displacement direction of the bars (4) from a position in which the combs (11) are approximately in horizontal position to another in which the combs (11) are more or less vertical.

5. Process in accordance with any of the claims 1 to 4, characterized in that the combs (11) carrying the bars (4) are turned successively from a more or less vertical position towards a more or less horizontal position to deposit the bars (4) onto the stacking platform (14).

6. Process in accordance with any of the claims 1 to 5 characterized in that before adjusting the spacings between the axes of the bars (4), as described in step b) of claim 1, the row of bars (4) situated up-stream of the group (9) resp. (15) of bars (4), carried by the first series of combs (7) is lightly retracted.

7. Device for forming regular stacks of rigid bars (4) comprising means for forming a continuous row of juxtaposed bars (4), means for removing a group of bars (4) from the end of the row, the size of the group corresponding more or less to the size of the stack to be formed and means for transporting said group of bars (4) towards the stacking platform (14) characterized in that it comprises:

a) means to move a first series of combs (7) featuring teeth (8) more or less adapted to the cross section of the bars (4) underneath the above mentioned bars, the combs (7) being directed transversely in respect of the bars (4) and the combs (7) being connected to means able to lift the group of bars (4) from the row of bars (4),

b) means for adjusting the spacings between the axes of the bars (4) carried by said combs (7) to the maximum tolerance in the size of the bars (4), which means are the combs (7) themselves,

c) means for placing a second series of combs (11), having teeth (12) adjusted to the spacings required by the maximum tolerance in size of the bars, underneath said group of bars (4),

d) means for lowering the first series of combs (7) in order to deposite the group of bars (4) onto said second series of combs (11),

e) means for moving this second series of combs (11) carrying the bars (4) towards the stacking platform (14) and

f) means for turning and retracting successively the second series of combs (11) to incline and ultimately deposit the bars (4).

8. Device in accordance with claim 7 characterized in that the first series of combs (7) is articulated with an axis (13) perpendicular to the row of bars, means being provided for turning these combs (7) around above mentioned axis (13) in order to adjust the angle formed by the bars (4) and the direction of the combs (7).

9. Device in accordance with any of the claims 7 or 8 for forming stacks comprising groups (9) of *n* bars (4) between groups (15) of n-1 bars (4), the latter ones being turned over groups (9) of *n* bars (4), characterized in that the device comprises means for placing a third series of combs (16) under the group of bars (4) carried by a first series of combs (7), the third series of combs (16) having n-1 teeth, means for lifting said combs (16) to lift n-1 bars (4), means (18) to clamp said bars onto said combs (16), means for turning said combs (16) around an axis (21) parallel to the bars (4) towards the stacking platform (14) and means for lowering said combs (16) in order to deposit the group (15) of n-1 bars onto the subjacent group (9) of *n* bars.

10. Device in accordance with any of the claims 7 to 9 characterized in that said second series of combs (11) comprises means by which they can be turned around an axis (13) parallel to the displacement direction of the bars between a more or less horizontal and a more or less vertical position of the combs (11) and inversely.

11. Application of the process as claimed in any of the claims 1 to 6 as well as the application of the device as claimed in any of the claims 7 to 10 to form parallelepipedic stacks of metal bars of V-shaped cross section.

FIG_1

FIG_2

FIG_3

FIG_4

FIG_5

FIG_6

FIG_7

FIG_8

FIG_9

FIG_10

FIG_11

FIG_12

FIG.13

FIG.14

FIG.15

FIG_16

FIG_17